# EUROPEAN PATENT APPLICATION

(11) **EP 4 589 502 A1**
(43) Date of publication of application: **23.07.2025**
(21) Application number: 24152948.6
(22) Date of filing: 19.01.2024
(51) Int. Cl.: G06Q 10/0631, G06Q 10/0633, B63B 49/00, B63B 79/40

(54) **ASSISTING A USER TO AUTOMATE OPERATIONS OF A VESSEL**

(71) Applicant: ABB SCHWEIZ AG, 5400 Baden (CH)
(72) Inventor: MAN, Yemao, 171 55 Solna (SE); BJORNDAL, Petra, 645 52 Strängnäs (SE); BRORSSON, Emmanuel, 724 69 Västerås (SE); HJUKSE, Ola, 3033 Drammen (NO); PELTONIEMI, Niklas, 00240 Helsingfors (FI); COLLING, Alina, 0578 Oslo (NO)
(74) Representative: Kransell & Wennborg KB

(57) **Abstract**

The invention relates to a method for assisting a user in automating operations of a vessel, a user assisting device and a vessel comprising such a user assisting device. The device provides a number of scenarios for operating the vessel, provides for a scenario to be designed or modified, a set of actions (A1, A2, A3) triggerable by conditions in or around the vessel, receives a selection of at least one action (A1, A2) of the set from the user and implements the at least one action (A1, A2) for being performed in the scenario if at least one corresponding condition is being fulfilled.

## Description

### TECHNICAL FIELD

The invention relates to a method for assisting a user in automating operations of a vessel, a user assisting device and a vessel comprising such a user assisting device.

### BACKGROUND

Deck officers of vessels often perform a series of small tasks or want to access different information in different scenarios (e.g. mooring, open water navigation, archipelago navigation) during their daily operations. This may lead to noise and distractions, require extra steps of clicks, which can reduce their operational efficiency.

One example is that alarms today are not flexible enough to adapt to different operational situations, leading to an overwhelming amount of alarms that are hard to identify and locate.

Another example is that officers have to take a series of actions manually to prepare for night shift, critical situation handling or even cargo planning. All these may cause inefficiency, delay in response, distraction or confusion.

Therefore, there is a need for automating actions of a vessel.

Various automation attempts have been made in relation to vessels.

For instance, US 2020/0102057 discloses an integration hub having an API via which manufacturers may access features or data of software installed on the integration hub. The integration hub is part of a bonded marine information display system. A watercraft builder may also customize the design and menus of a user interface via software configured in the bonded marine information display system. The user interface may include a number of situational modes, including a cruise mode and an anchor mode. Situational modes may be automatically triggered by sensors or other data, A change between situational modes may also trigger operational actions on the vessel itself.

On the other hand, US 2018/0292213 discusses different operational modes of a marine vessel in which displayed information varies according to mode. The change of modes is made based on geozones.

US 2017/0210449 likewise discloses the selecting of mode of operation based on geographic location.

There is however a need for an improvement in the field. More, particularly, there exists a need for allowing a user to more freely determine actions to be used in different situations, while at the same time avoiding burdening the user with unnecessary options.

### SUMMARY

One object of the invention is therefore to assist a user of a vessel in automating operation of the vessel.

This object is according to a first aspect achieved through a method for assisting a user in automating operations of a vessel, the method being performed by a user assisting device and comprising:
providing a number of scenarios for operating the vessel,
providing for a scenario to be designed or modified, a set of actions triggerable by conditions in or around the vessel;
receiving a selection of at least one action of the set from the user; and
implementing the at least one action for being performed in the scenario being designed or modified if at least one corresponding condition is being fulfilled.

The object is according to a second aspect achieved through a user assisting device comprising a processor operative to:
provide a number of scenarios for operating the vessel,
provide for a scenario to be designed or modified, a set of actions triggerable by conditions in or around the vessel;
receive a selection of at least one action of the set from a user; and
implement the at least one action for being performed in the scenario being designed or modified if at least one corresponding condition is being fulfilled.

The object is according to a third aspect achieved through a vessel comprising the user assisting device according to the second aspect. The vessel may additionally comprise a first sensor operable to obtain weather data and a second sensor operable to obtain traffic data.

The vessel may additionally comprise a vessel control device operative to provide a vessel control function, which vessel control function is configured to apply the selected at least one action in the operation of the vessel in the modified or created scenario if the at least one corresponding condition is being fulfilled.

A condition that is used to trigger an action may be predefined, so that a selection of an action in the provided set of actions may also involve the selection of a corresponding condition that triggers the action.

Alternatively, the user may be allowed to select conditions that are used to trigger actions.

According to one variation of the first aspect, the method further comprises receiving, from the user, a selection of at least one condition used to trigger the at least one selected action.

According to a corresponding variation of the second aspect, the user assisting device is further operative to receive, from the user, a selection of at least one condition used to trigger the at least one selected action.

According to another variation of the first aspect, the method further comprises determining the set of actions based on data from sensors sensing the environment of the vessel and/or based on data from the vessel.

According to a corresponding variation of the second aspect the user assisting device is further operative to determine the set of actions based on data from sensors sensing the environment of the vessel and/or based on data from the vessel.

The sensors sensing the environment may be sensors providing traffic data and weather data. The data from the vessel may comprise navigational data, operational data, physical status data, temporal data, energy data and/or maintenance data. It is possible that the data from the vessel is also sensed via sensors. However, data may also or instead be received from different vessel functions, such as a vessel control function, a load information management function and a maintenance function.

The navigational data may comprise data such as, heading, speed, location course, turn rate and rate of acceleration or deceleration. Operational data may comprise data such as draft, trim, stability data like heel and list, propulsion data like metrics of ships engines and propulsions systems and rudder angle. The physical status data may comprise data, such as tonnage, cargo details, types quantities, distribution of cargo onboard, crew or passenger info, stability fins status, watertight and fire door status. The temporal data may comprise data such as shipboard time and required arrival time. The energy data may comprise data such as fuel levels and battery status and maintenance data may comprise data such as engine control room's engineers' maintenance schedule.

It is furthermore possible to use machine learning to predict and automatically recommend actions to be triggerable, based on historical data and real-time sensor data of the environment of the vessel and/or real-time data from the vessel.

According to yet another variation of the first aspect, the method may also comprise determining conditions causing the actions to be performed based on the data from the sensors sensing the environment of the vessel and/or the data from the vessel.

According to a corresponding variation of the second aspect the user assisting device is in this case further operative to determine conditions causing the actions to be performed based on the data from the sensors sensing the environment of the vessel and/or the data from the vessel.

The scenarios may be of different types. They may for instance be event-triggered or associated with operations intervals, where a scenario that is associated with an operations interval may be time-based or position-based. A position-based scenario may be based on the vessel position and/or the position of a vessel operator within the vessel, such as the position of a bridge officer within the vessel. The scenarios may additionally be provided by a supplier or designed by a user. The scenarios may comprise different vessel operations scenarios, such as unberthing, travel at open sea, travel through an archipelago, berthing and critical situation scenarios. The scenarios may also compromise nightshift and dayshift scenarios.

The set of actions being provided may depend on the type of scenario to be designed or modified.

At least some of the scenarios may be associated with corresponding operations intervals. Furthermore, at least one of the intervals may be event-triggered. This interval may thus be dynamic. Other operations intervals may be fixed and set by endpoints that set the beginning an end of the operations interval.

According to one variation of the first aspect, the method further comprises receiving, from the user, a selection of a first endpoint of an operations interval of the scenario being designed or modified, which first endpoint is either the beginning or the end of the operations interval.

According to a corresponding variation of the second aspect the user assisting device is in this case further operative to receive, from the user, a selection of a first endpoint of an operations interval of the scenario being designed or modified, which first endpoint is either the beginning or the end of the operations interval.

The first endpoint is thus one of the beginning and end of the operations interval.

According to another variation of the first aspect, the method further comprises receiving, from the user, a selection of a second endpoint of the operations interval of the scenario being designed or modified, which second endpoint is the other of the beginning and end of the operations interval.

According to a corresponding variation of the second aspect, the user assisting device is in this case further operative to receive, from the user, a selection of a second endpoint of the operations interval of the scenario being designed or modified, which second endpoint is the other of the beginning and end of the operations interval.

The operations interval may be a time interval. Alternatively or additionally, the operations interval may be an interval of positions along a part of a route of the vessel. For an interval of positions, the beginning of the interval may be a first position of the part of the route and the end may be a last position of the part of the route.

In this case, the method may further comprise receiving a selection from the user of a path between the first and last positions, comparing the path with regulatory rules and guidelines and changing the path if it does not fulfil the regulatory rules and guidelines.

In the above-mentioned case the user assisting device may be further operative to receive a selection from the user of a path between the first and last positions, comparing the path with regulatory rules and guidelines and changing the path if it does not fulfil the regulatory rules and guidelines.

Aspects of the invention allows a user to more freely determine actions to be used in different situations, while at the same time avoiding burdening the user with unnecessary options. There is thus provided a flexible system that allows operators to create, modify, and implement a wide array of custom situational modes beyond the standard ones, or give them sufficient freedom to define automation rules. Aspects thus provide increased customisation and flexibility.

It should be emphasized that the term "comprises/comprising" when used in this specification is taken to specify the presence of stated features, steps or components, but does not preclude the presence or addition of one or more other features, steps, components or groups thereof.

### BRIEF DESCRIPTION OF THE DRAWINGS

The invention will now be described in more detail in relation to the enclosed drawings, in which:
fig. 1 schematically shows a first way of realizing a user assisting device,
fig. 2 shows a computer program product in the form of a CD ROM with computer program code used to implement the user assisting device,
fig. 3 schematically shows a first vessel comprising the user assisting device,
fig. 4 schematically shows a chart with the first vessel travelling along a route,
fig. 5 shows a flow chart of a number of method steps in a first embodiment of a method of automating operations in the first vessel,
fig. 6 shows a list of scenarios provided by the user assisting device,
fig. 7 shows an overview of a user interface provided by the user assisting device,
fig. 8 shows an overview of a number of scenarios that are to be applied during operation of the first vessel along the route,
fig. 9 shows a flow chart of a number of method steps in a second embodiment of the method of assisting a user in automating operations in the first vessel,
fig. 10 shows an action suggestion window with actions that are selectable by a user and an action tree window where actions can be combined,
fig. 11 shows the setting up of conditions for executing actions in the action tree,
fig. 12 shows a flow chart of a number of method steps for determining a scenario, and
fig. 13 schematically shows a change of a part of route in the determined scenario based on rules and regulations.

### DETAILED DESCRIPTION

In the following description, for purposes of explanation and not limitation, specific details are set forth such as particular architectures, interfaces, techniques, etc. in order to provide a thorough understanding of the invention. However, it will be apparent to those skilled in the art that the invention may be practiced in other embodiments that depart from these specific details. In other instances, detailed descriptions of well-known devices, circuits and methods are omitted so as not to obscure the description of the invention with unnecessary detail.

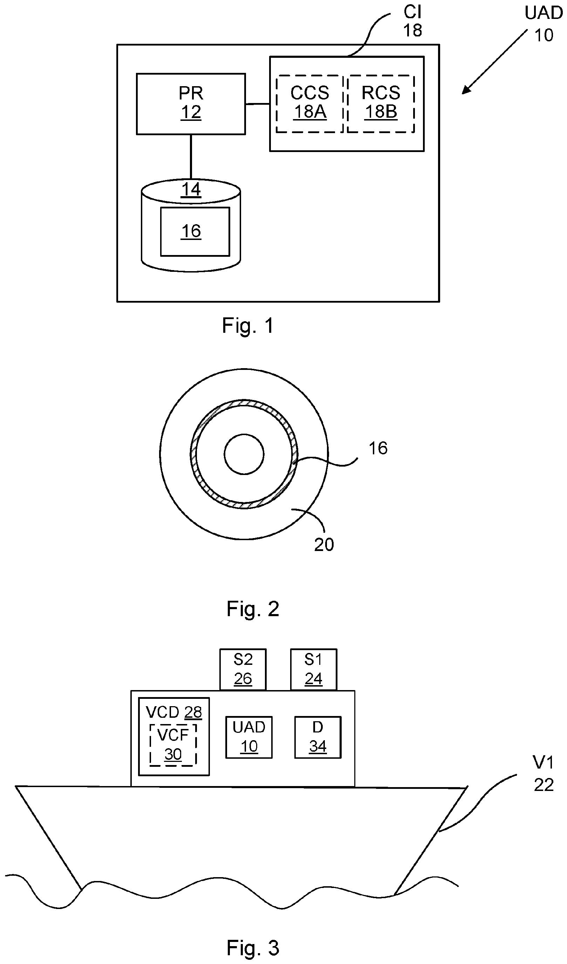

Fig. 1 schematically shows one realization of a user assisting device UAD 10. In the present example, the user assisting device 10 comprises a processor PR 12 and a data storage or memory 14 with computer program instructions or computer program code 16 that, when executed by the processor 12, implements a user assisting function. There is also a communication interface CI 18. The communication interface 18 may have a computer communication section CCS 18A and/or a radio communication section RCS 18B, where the computer communication section 18A may be an Ethernet interface for connection to a local area network (LAN) for instance a LAN provided in a vessel and the radio communication section 18B may comprise a transceiver for transmission and reception of radio signals. It should be realized that it is possible that the communication interface 18 only comprises the computer communication section 18A and not the radio communication section 18B or vice versa.

The user assisting device 10 may thus comprise a processor 12 with associated program memory 14 including computer program code 16 for implementing the user assisting function.

A computer program may also be provided via a computer program product, for instance in the form of a computer readable storage medium or data carrier, like a CD ROM or a memory stick, carrying such a computer program with the computer program code, which will implement the user assisting function when being loaded into a processor. Such a storage medium may be a non-transitory storage medium. One such computer program product in the form of a CD ROM 20 with the above-mentioned computer program code 16 is schematically shown in fig. 2.

The user assisting device 10 may with advantage be provided in a vessel.

Fig. 3 schematically shows a first vessel V1 22 comprising the user assisting device UAD 10. As can be seen in the figure, the first vessel 22 also comprises a first sensor S1 24, a second sensor 26, a vessel control device VCD 28 that implements a vessel control function VCF 30 and a display D 34. The computer communication section of the previously described communication interface may here be used for communicating with the vessel control device 28, the first and second sensors 24, 26 and the display 34. For this reason, these may all be connected to a LAN.

The first sensor 24 may be a sensor for sensing weather conditions around the first vessel 22. Thereby the first sensor 24 may be a wind sensor that senses the speed and/or direction of the wind. The second sensor 26 may be a sensor sensing surrounding traffic, such as an automatic identification system (AIS) transceiver. Alternatively, it can be a radar or a Lidar.

There may also be other sensors for sensing the vessel position, heading and speed. Alternatively, vessel position, heading and speed may be obtained from the vessel control device 28 together with other vessel operations data such as data about when a change of heading and speed is made and data about commands effecting such change. Also, other sensors may be provided, such as sensors sensing conditions on the first vessel 22, such as temperature and ambient light levels on a bridge of the first vessel 22.

Aspects of the present disclosure are directed towards assisting a user in automating various aspects of operation of the first vessel, for instance during a passage of the first vessel along a route.

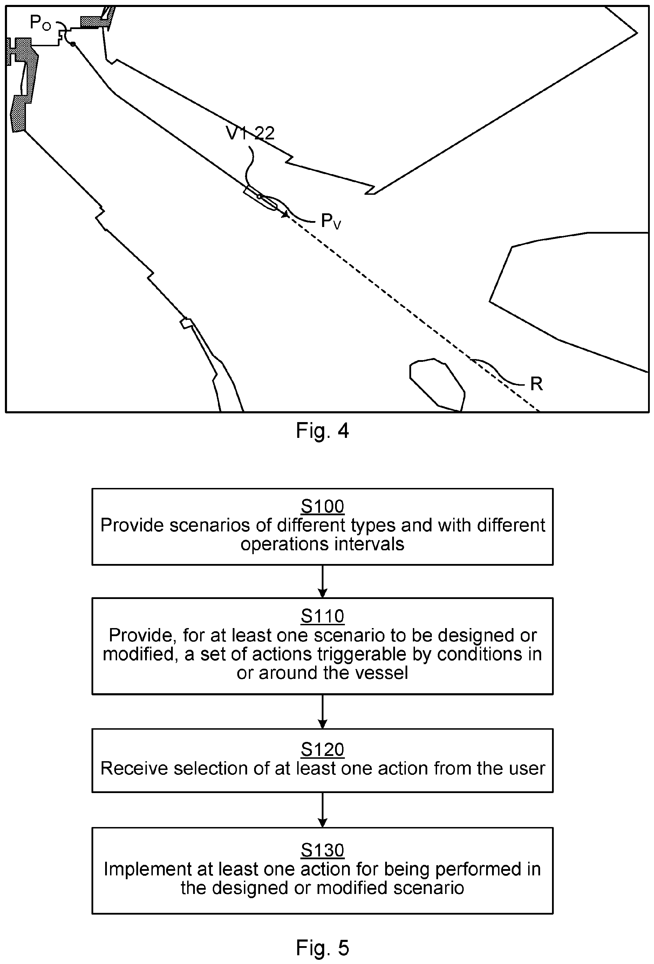

Fig. 4 shows an exemplary chart in which the first vessel V1 22 travels along a route R from a point of origin P_{O} to a point of destination (not shown).

As can be seen in fig. 4, the first vessel 22 starts at the point of origin P_{O} of the route R and then continues towards the point of destination (not shown). The point of origin Po may with advantage be a point in a first harbour and the point of destination may be a point in a second harbour. In the example in fig. 4, the first vessel 22, after leaving the first harbour, enters an archipelago of which two islands are shown. After passing the archipelago the first vessel 22 may enter open waters. In the figure also the vessel position Pv is shown. The first vessel 22 also moves with a heading and a speed. The speed and heading of the first vessel 22 is indicated through a vector.

During this trip the user assisting device 10 may collect data, such as wind data from the first sensor 24 and traffic data from the second sensor 26. It may also collect vessel operations data, such as position data, heading data and speed data. The vessel operations data may be collected by the user assisting device 10 from the vessel control device 28 or from dedicated sensors.

The first vessel 22 may undergo different stages during the passage along the route R. There may for instance be an unberthing stage when the vessel leaves the point of origin P_{O} and a berthing stage when the first vessel reaches the point of destination. There may also be other stages, such as navigation at open sea and navigation through an archipelago. These different stages may have different needs when it comes to control of the vessel. There are also other situations that may have different needs, such as night-time and daytime operation and navigation in critical situations when there is a lot of traffic etc. Navigation in a critical situation may be linked to a stage. However, it can also be context dependent, for instance if there is a lot of traffic. This means that this situation may be event-triggered.

During these stages and situations different actions may need to be performed on the vessel and these actions may additionally be triggered by different conditions fulfilling corresponding condition criteria.

Furthermore, also events may happen that need to be addressed. An event may be generated for a complex situation that demands an immediate and flexible response involving a number of actions.

In order to simplify the operation of the vessel, the operation may be automated. However, because the stages, situations and events have different requirements, the control being performed may need to vary considerably. Furthermore, some of the situations may coincide with the above-mentioned stages of travel of the first vessel 22.

In order to simplify the automation, there is suggested the use of scenarios of different types. There may for instance be event-triggered scenarios or scenarios that are associated with operations intervals, where a scenario that is associated with an operations interval may be time-based or position-based. The scenarios may additionally be provided by a supplier or designed by a user. The scenarios may comprise different vessel operations scenarios, such as unberthing, travel at open sea, travel through an archipelago, berthing and critical situation scenarios. The scenarios may also compromise nightshift and dayshift scenarios. Thus, a scenario may correspond to a stage in the travel along a route a special time-based situation or an event-triggered situation. Each time- or position-based scenario may additionally be associated with or performed in a corresponding operations interval. An operations interval may additionally be event-triggered. It may thus be dynamic. Alternatively, an operations interval may be fixed and set by endpoints that set the beginning and end of the operations interval. The operations interval may be a time interval. Alternatively or additionally, the operations interval may be an interval of positions along a part of a route of the vessel. The intervals may thus be position intervals, for instance for the different stages mentioned above, where a first endpoint that is the beginning of the interval may be a first position at a part of the route and a second endpoint that is the end of the operations interval may be a last position of the part of the route. The intervals may also be time intervals, where the first endpoint is a starting time of the part of the route and the second endpoint is an end time of the part of the route. A scenario having a time interval as operations interval may be a time-based scenario, while a scenario having a position interval as operations interval may be a position-based scenario.

The above-described position-based scenario is a scenario that is based on the vessel position. A position-based scenario may additionally or instead be based on the position of a vessel operator within the vessel, such as the position of a bridge officer within the vessel. A bridge officer's position on a bridge may for instance be used to trigger scenarios. For instance, if a captain of the vessel goes to a wing of the bridge, the monitors on the wing may get their displayed content automatically adapted for a more detailed view or display, for human operators to check and see, according to an "automation rule" set in that particular "go to wing" scenario.

As was mentioned above some scenarios may also be event-triggered, for instance through the reception of a TCPA alarm.

Furthermore, the scenarios may additionally have different actions that are employed automatically because the vessel is operating based on corresponding triggering conditions.

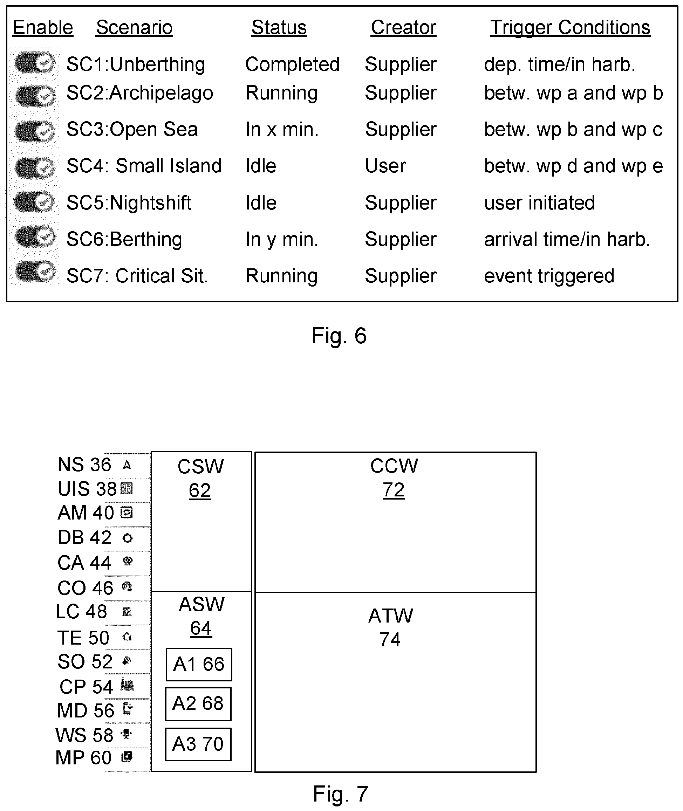

How, the scenarios may be used in the control of the first vessel will now be described with reference also being made to fig. 5, 6 and 7, where fig. 5 shows a flow chart of a number of method steps in a first embodiment of a method of assisting a user in automating operations in the first vessel, fig. 6 shows a list of scenarios provided by the user assisting device and fig. 7 shows an overview of the user interface provided via the display by the user assisting device.

The user assisting function of the user assisting device 10 provides a number of scenarios that a user may select to apply in the control of the first vessel 22, S100, i.e. for operating the first vessel 22, As is indicated above, the scenarios are of different types and some may additionally have different operations intervals, where the different types of scenarios may be different types of position-based scenarios, different types of time-based scenarios or different types of event-triggered scenario. The different types of position-based scenarios may include at least some of the previously-mentioned navigation-related scenarios comprising the types unberthing, open sea navigation, archipelago navigation and berthing. The scenarios may comprise default scenarios. It is also possible that a user designs a scenario him-or herself.

As was mentioned earlier, for a position-based scenario, the operations interval may be a position interval with a beginning and an end position and for a time-based scenario the operations interval may be a time interval with a beginning and an end time. It is here possible that the beginning and end points of the intervals are set automatically by the user assisting function. It is additionally possible that the user sets one or both of the beginning and end points. The beginning point of an unberthing scenario and the end point of a berthing scenario may for instance be set by the user assisting function, while the user may set the end point of the unberthing scenario and the beginning point of the berthing scenario. It is possible that the user sets both the beginning and end points of at least some of the other navigational scenarios. It is also possible that a scenario is both position- and time-based.

As is indicated above, some scenarios may be event-triggered, where the starting point of the interval is set by a first triggering event. In this case the end point of the interval may be set by a second triggering event, which second triggering event may be that a situation triggering the first event is no longer at hand. Alternatively, another situation, for instance a situation used to trigger a further event-triggered scenario, may be used to obtain the above-mentioned endpoint. In these cases the starting and end points of the interval are dynamically set by the user assisting function during operation of the first vessel.

Fig. 6 shows a table with different exemplifying scenarios, their status, creators and trigger conditions.

As can be seen there is first scenario SC1, unberthing, which has been created by the supplier of the user assisting device and is triggered by both time and position. It is thus both a time- and position-based scenario. In this case the scenario is triggered by the departure time and by the position of the first vessel being in the first harbour, such as being at the position of origin. There is also a second scenario SC2, archipelago navigation. Also the second scenario SC2 has been created by the supplier. It is performed in an operations interval defined between a first waypoint and a second waypoint (wp) a, b. Thus, the operations interval is a position interval. Furthermore, there is third scenario SC3, an open sea navigation scenario. This scenario has been created by the supplier and is performed in an operations interval between the second and a third waypoint b, c. There is furthermore a fourth scenario SC4, a small island navigation scenario. This scenario has been created by the user and is performed in an operations interval between a fourth and a fifth waypoint d, e.

There is also a fifth scenario SC5, a nightshift scenario, which has been created by the supplier and that is user-initiated. Alternatively, the nightshift scenario could be time-based and performed in an operations interval that is a time interval. There is a sixth scenario SC6, a berthing scenario. It has been created by the supplier and is performed in an operations interval, the beginning point of which depends on both the arrival time and the position in the second harbour. Finally, there is a seventh scenario SC7, a critical situations scenario, which is event triggered and performed in case a critical situation occurs. This scenario has also been created by the supplier.

All the scenarios are enabled, which means that they will be performed if the right conditions are at hand or the user decides to activate them.

Some scenarios may be implemented in the operations intervals without modifications. However, they may need to be confirmed by the user before being implemented.

Each scenario may comprise at least one action that is being performed in the corresponding operations interval. It is additionally possible that the action is performed if a condition in or around the vessel is fulfilled. In some cases, the entering of the operations interval may be considered to be such a condition. In other situations, one or more other conditions may be used after the entering of the operations interval. Examples of conditions include decreasing the vessel speed if there is traffic within a closest point to approach (CPA) or time to closest point to approach (TCPA) threshold and dimming the lights on the bridge of the vessel at a certain point in time.

It is possible that the actions and/or conditions in an operations interval are fixed, but that they are customized by the user. The user may for instance set a reduced speed level and/or the CPA as well as the light dimming level and the point in time when the dimming takes place. However, the fact that a speed reduction is made for a CPA value and the fact that dimming is made may be fixed. It is additionally possible that a user can add conditions for the performing of an action. It is for instance possible that the speed reduction is made based on weather data in addition to CPA. Finally, it is possible that a user adds also new actions.

A scenario to be designed or modified, which may be a time-based scenario, a position-based scenario or even an event-triggered scenario, may then be provided for the user. If the scenario that is to be created is time- or position-based, then the user assisting function of the user assisting device 10 may receive, from the user, a selection of a first endpoint of the operations interval of the scenario, which first endpoint is either the beginning or the end of the operations interval. The first endpoint is thus one of the beginning and end of the operations interval. It is additionally possible that a selection of a second endpoint of the operations interval of the scenario is received from the user, which second endpoint is the other of the beginning and end of the operations interval. If the first endpoint is the beginning of the operations interval then the second endpoint is the end of the operations interval or vice versa.

Furthermore for the scenario that is to be designed or modified, there is provided a set of actions triggerable by conditions in or around the first vessel 22, S110. A condition that is used to trigger an action may be predefined. Thereby a selection of an action in the provided set of actions may also in essence be a selection of a corresponding condition that triggers the action. It is also possible that the conditions that can trigger actions in the set are being provided in order to allow the user to select these conditions. The actions of set and the corresponding conditions may thus be provided by the user assisting device 10, where it is possible that these actions and conditions can be customized by the user. The set of actions may additionally depend on the type of scenario. There may thus be different types of actions available to users to choose from depending on if the scenario is position-based, time-based or event-triggered as well as based on if the scenario is a type of navigation scenario or a day and nightshift scenario.

Furthermore, these actions may be suggestions for being used when the scenario that is designed is being implemented and used.

The user assisting function of the user assisting device 10 then receives a selection of at least one action of the set from the user, S120. If also conditions are selectable, it is possible that the user assisting function also receives a selection from the user of at least one condition used to trigger the at least one selected action.

Fig. 7 shows a set of suggested actions A1 66, A2 68, A3 70 in an action suggestion window ASW 64. In order to let one or more of these actions be a part of the scenario being designed, the user may move them to an action tree window ATW 74, via which he or she may implement the actions that are to be performed in the scenario, perhaps also based on corresponding conditions. There is also a condition suggestion window CSW 62 that may include conditions that are suggested for use as triggers to the actions.

However, in the present example this window 62 is empty. The window 62 may be populated when an action is placed in the action tree window 74. Alternatively, the user may also select a condition from the condition suggestion window 62 and drag to the action tree window 74 for use as a trigger for one or more actions.

The user may also create one or more conditions for the actions in the action tree window 74 in a condition creation window CCW 72. New conditions may also be created inaction tree window 74.

There are also a number of general actions that the user can select and add to all scenarios. There are here navigation settings NS 36, user interface settings UIS 38, alarm modality AM 40, display brightness DB 42, camera CA 44, communication CO 46, lights and coverings LC 48, temperature TE 50, sound SO 52, cargo planning CP 54, mobile device MD 56, work station seat WS 58 and media player MP 60. It is possible for the user to drag also any of these actions to the action tree window 74 in order to make additional settings in the scenario that is being designed.

It should here be realized that the shown actions are mere examples. Other examples of actions include Management (about energy consumption configuration, fuel efficiency), Safety Systems (fire suppression, or life boat..), Stabilization Systems (minimize roll and pitch), Bridge Wing Controls (controls and information available on the bridge wings).

In the action tree window 74 the relationship between the different actions and optionally also to one or more conditions may be set. There the user can set if the actions are to be performed in parallel and/or in sequence. This is an orchestration of the actions.

When the user is finished with determining which actions are to be performed in the scenario and has orchestrated the order in which they are to be performed, the actions in the action tree window 74 are then implemented. Thus, it is clear that at least one action is implemented for being performed in the designed or modified scenario, S130, which at least one action may be performed in the operations interval of the scenario if at least one corresponding condition is being fulfilled.

It can in this way be seen that the user can in an easy way implement one or more scenarios that automate the operation of the first vessel. This is also done while at the same time avoiding burdening the user with unnecessary options. Thereby the action tree can efficiently created.

Furthermore, with the ability to predefine a comprehensive suite of actions and triggered conditions (in addition to time or position, also include alarm sensor triggered conditions like TCPA alarm, and this is like setting the boundary for automations), it is possible to proactively prepare for a wide array of potential situations without the necessity of describing what would be exactly happening in that situation. This proactivity enables the vessel to be equipped with a robust framework of contingency plans (essentially it is a set of automation rules encapsulated by context based "scenarios"), ensuring that when the unexpected arises, the user assisting device can swiftly adapt, executing pre-planned actions that align with the real-time demands of the dynamic maritime environment.

These scenarios may then be automatically applied or applied after activation by the user during the travel of the first vessel 22 along the route R. Thereby, the vessel control function 30 of the vessel control device 28 may apply the selected at least one action in the operation of the first vessel 22 in the modified or created scenario if the at least one corresponding condition is being fulfilled.

The scenarios may thus have user-defined or manufacturer-defined actions and triggering conditions. Scenarios can also be triggered upon user confirmation. The user can also manually trigger actions. The user assisting device thus allows default, built-in yet customizable scenarios for frequently encountered contexts such as critical situations, night shifts, and various voyage stages.

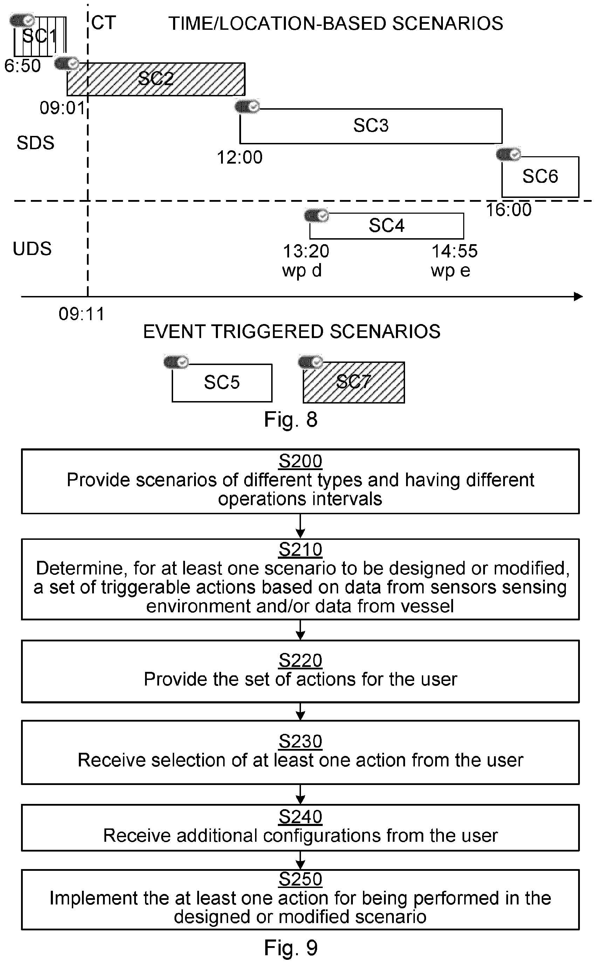

Fig. 8 shows a view of the different scenarios from the table of fig. 6, where the time/location-based scenarios are indicated in time.

In the shown example there is a current time CT, which is 09:11. It can be seen that at this current time CT, the second scenario SC1 is running and in the process of being used. The reason for this is that the first vessel 22 is located between the first and second waypoints a, b. The running of the second scenario SC2 started at time 09:01 and will end at time 12:00. Also, the seventh scenario SC7 is running, which is due to the fact that the triggering conditions for the seventh scenario SC7 have been fulfilled. It can also be seen that the third scenario SC3 will start to run at time 12:00 after the second scenario SC2 and that the sixth scenario SC6 will start to run at time 16:00 after the third scenario SC3. It can also be seen that the first scenario SC1 has been completed. Furthermore, it can also be seen that the fourth scenario SC4 will start to run at time 13:20 when the vessel reaches the fourth waypoint d and that it will be ended at time 14:55 when the first vessel 22 reaches the fifth waypoint e. The fifth scenario SC5 is idle, but can be activated by the user when a nightshift is to be started.

The user may additionally be able to search scenarios and see upcoming actions and action history.

Thereby the user can get a good overview of the past, present and future scenarios as well as already performed and future actions in these scenarios.

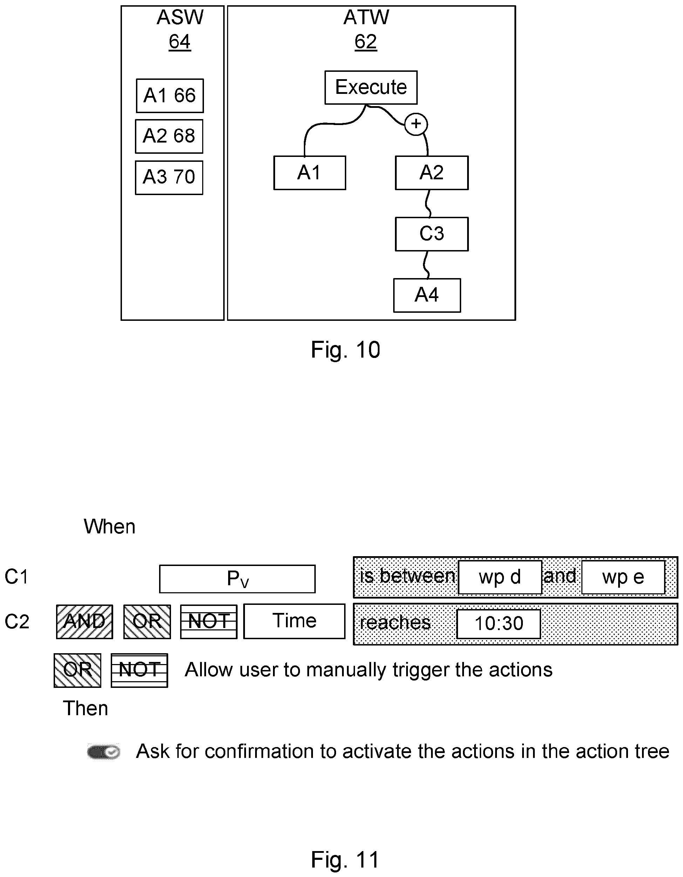

A second embodiment will now be described with reference being made to fig. 9, 10 and 11, where fig. 9 shows a flow chart of a number of steps in the method of assisting a user of automating operations in the first vessel, fig. 10 schematically shows the action suggestion window with actions that are selectable by the user and the action tree window in which actions are combined and fig. 11 shows the creation of conditions for the action tree.

The user assisting function of the user assisting device 10 again provides a number of scenarios that a user may select to apply in the control of the first vessel 22, S200, where, as is indicated above, the scenarios are of different types and at least some have different operations intervals, where the different types of scenarios comprise position-based scenarios, time-based scenarios and/or event-triggered scenarios. The time and/or position-based scenarios may include the previously-mentioned navigation-related scenarios, with the types unberthing, open sea navigation, archipelago navigation and berthing. The scenarios may comprise default scenarios. It is also possible that a user completely designs a scenario him-or herself.

The user may then be presented with a scenario that he or she is to design or modify, which scenario may be a time-based scenario, a position-based scenario. Alternatively, it may be an event-triggered scenario. It is also possible that the scenario is a scenario created by the supplier or one that the user creates him-or herself.

Also in this case it is possible that a selection of a first endpoint of the operations interval of the scenario is received from the user, where again the first endpoint is either the beginning or the end of the operations interval. It is of course also possible that a selection of a second endpoint of the operations interval of the scenario is received from the user.

Furthermore, for the scenario that is to be designed or modified, the user assisting function of the user assisting device 10 also determines a set of actions triggerable by conditions in or around the vessel, where the actions that are being provided are based on data from sensors sensing the environment of the vessel and/or data from the vessel, S210. Thus in the present case, the set of actions depend on data from the vessel sensors, such as weather data from the first sensor 24 and traffic data from the second sensor 26 and/or data from the vessel, such as navigational data, operational data, physical status data, temporal data, energy data and/or maintenance data. It is possible that the data from the vessel is also sensed via sensors. However, data may also or instead be received from different vessel functions, such as the vessel control function, a load information management function and a maintenance function. It is optionally possible that the conditions that are to trigger the actions, i.e. the conditions that cause the actions to be performed, are being determined by the user assisting function based on the data from sensor sensing the environment and/or data from the vessel. The user assisting function may have knowledge about which actions and optionally also which conditions could be of relevance for a certain type of scenario and suggest these actions and conditions for inclusion in the control according to the scenario. It is for instance possible that data from a wind sensor provides a suggestion of an action that influences the navigation, such as a change of heading. Also traffic data from a traffic sensor may be used to generate an action such as a change of speed. The actions in the set may thus comprise the actions change of speed and change of heading.

The navigational data may comprise data such as, heading, speed, location course, turn rate and rate of acceleration or deceleration. Operational data may comprise data such as draft, trim, stability data like heel and list, propulsion data like metrics of ships engines and propulsions systems and rudder angle. The physical status data may comprise data, such as tonnage, cargo details, types quantities, distribution of cargo onboard, crew or passenger info, stability fins status, watertight and fire door status. The temporal data may comprise data such as shipboard time and required arrival time. The energy data may comprise data such as fuel levels and battery status and maintenance data may comprise data such as engine control room's engineers' maintenance schedule.

It is furthermore possible that the user assisting function of the user assisting device 10 uses machine learning to predict and automatically recommend actions to be triggerable, based on historical data and real-time sensor data of the environment of the vessel and/or real-time data from the vessel.

The actions in the set and possibly also the conditions that are to trigger them are thus provided by the user assisting function of the user assisting device and the actions depend on the scenario type as well as on data from the sensors.

Furthermore, these actions are suggestions for being used when the scenario that is designed or modified is being implemented and used in the control of the first vessel 22.

The user assisting function then provides the triggerable set of actions for the user, S220. It may do this through displaying the set of actions in the action suggestion window 64. As was mentioned earlier, these actions may be triggerable by conditions in or around the first vessel, such as the wind speed being above a certain wind speed threshold and surrounding traffic being closer to the first vessel than a CPA threshold. In fig. 10 there are three such suggested actions in the action suggestion window ASW 64, namely the first action A1 66, the second action A2 68 and the third action A3 70.

The set of actions are selectable by the user. Therefore, the user assisting function may receive a selection of at least one action from the user, S230.

This may be done through allowing the user to select one or more of the actions in the set for including in the scenario being designed through dragging them to the action tree window 74.

One or more of the selectable actions may be unconditional. These may be directly implemented when the scenario is activated. One or more of the actions may be conditional. One or more of the actions may thus be performed based on the fulfilment of one or more conditions. An action may thus be triggered by a condition, which may be the reaching of a point in time, the reaching of a position or a condition defined by data in or around the vessel meeting a corresponding trigger criterion.

It is possible that conditions that are to trigger the actions are independently selectable. In this case these selectable conditions may be displayed in the condition suggestion window 62. A condition may then be selected at the same as the user selects an action that it is to trigger. Alternatively, an action may be based one or more specific conditions. One or more specific conditions may thus be linked to such an action. In this case the selection of the action may also be a selection of the condition.

As was mentioned earlier, actions and triggering conditions can be user-defined or manufacturer-defined. The triggered conditions may incorporate ship location, operator position, status, current CPA or TCPA values, time, date, and sensor data for context-awareness and high customization.

Based on the ship's status, weather, traffic situation, the user assisting device may thus automatically suggests conditions and actions.

The user assisting device may additionally leverage advanced language processing tools, such as ChatGPT and other data analysis methods, to provide intelligent recommendations. Based on the user's text and vocal inputs, the user assisting device 10 may automatically suggest conditions and actions.

The user can speak his or her needs to the user assisting device 10 and the user assisting device 10 will translate his or her needs to executable actions for him or her to choose from. Then the user only needs to click apply so such an action will be directly put into the automation pipeline.

This makes scenario building more intuitive and accessible, even for non tech-savvy users.

Furthermore, the user assisting device may also provide an execution preview function for users when they select specific actions, such as UI layout adjustments. This allows users to preview the outcomes of selected automation actions, such as UI layout changes, before their implementation.

This helps users to understand the implications of their automation choices, enhancing the decision-making process, and avoiding unintended actions.

For instance, when the user wants to set up a new scenario between the fourth and fifth waypoints d,e on the chart, the user assisting device directly helps him or her to set up the conditions and also list a few recommended actions based on the weather, predicted traffic, and ship status and/or historical user behavior. The user may simply drag the action to the action tree to make it into the automation pipeline.

This is outlined in fig. 10, where it can be seen that the user has dragged the first action A1 to the action tree window 74. The user has also dragged the second action A2 to the action tree window 74.

It is possible that the first action is triggered by a first condition and the second action is triggered by a second condition. In this case, these conditions may have been suggested by the user assisting function in the condition suggestion window, moved therefrom to the action tree by the user or automatically provided based on the action selection.

However, in the present example the first and the second actions are both triggered by the first and second conditions and these conditions are being set by the user in the condition creation window 72.

In an example shown in fig. 11, the first condition C1 may be that the position of the vessel Pv is in the operations interval of the scenario, which in this example is between the fourth and fifth waypoints d, e. This can be all that is required for the actions of the action tree to be implemented. The actions in the action tree may also require the second condition C2, for instance a certain point in time, such as 10:30 for being executed. It is also possible that the user is allowed to manually trigger the actions.

For these conditions C1, C2 the actions of the action tree may then be activated, perhaps after confirmation from the user.

Furthermore, as can be seen in fig. 10, the first action A1 is placed by the user in a first execution branch and the second action A2 is placed in a second execution branch. The user has also added a further fourth action A4 after the second action A2 in the second execution branch, which fourth action A4 is triggered by the fulfilment of a third condition C3 that has also been placed in the action tree. The fourth action A4 may be one of the previously-mentioned general actions. Furthermore, the first execution branch will be performed in parallel with the second execution branch and the fourth action A4 will follow after the second action A2 if the third condition C3 fulfills a corresponding criterion. Thereby the first action A1 will be performed in parallel with the second and fourth actions A2, A4.

Thus the user assisting device allows for a sequence of actions, where one action follows another, parallel execution of actions, or conditional execution where one action follows another based on a specific condition, such as reaching a certain time or a set point in sensor values.

The action tree window 74 allows various actions in the maritime domain to be orchestrated, including configuring alarm modality, safety thresholds (like CPA, TCPA threshold, safety distance to other target ships during autonomous navigation), speed, course, information presentation (including layout and content), biophysical settings (such as sound, temperature, seat position, height, screen brightness, ambient light), and activation & deactivation of certain systems (including fins control system, crash stop system and messaging system). As can be seen above, it allows for a sequence of actions, where one action follows another, parallel execution of actions, or conditional execution where one action follows another based on a specific condition, such as reaching a certain time or a set point in sensor values. This feature facilitates greater control and adaptability in task execution. Thereby processes are streamlined and the need for manual tasks and memory-dependent actions is reduced, which also improves efficiency and safety.

Also here it is possible to use action preview and language processing tools for providing intelligent recommendations.

The scenario can be triggered upon user confirmation. The user can also manually trigger actions.

After the actions and possibly also the conditions have been determined, the user assisting function may then receive additional configurations from the user, S240, such as various customizations of the actions and/or conditions.

When the user is finished with determining which actions are to be performed in the scenario being designed or modified and has orchestrated the order in which they are to be performed, the actions in the action tree window are being implemented, which may be done upon user confirmation.

Thus it is clear that at least one action is implemented for being performed in the designed or modified scenario, S250, if a corresponding condition is being fulfilled.

For the different navigational scenarios, it is additionally possible that navigational rules and regulations are applied.

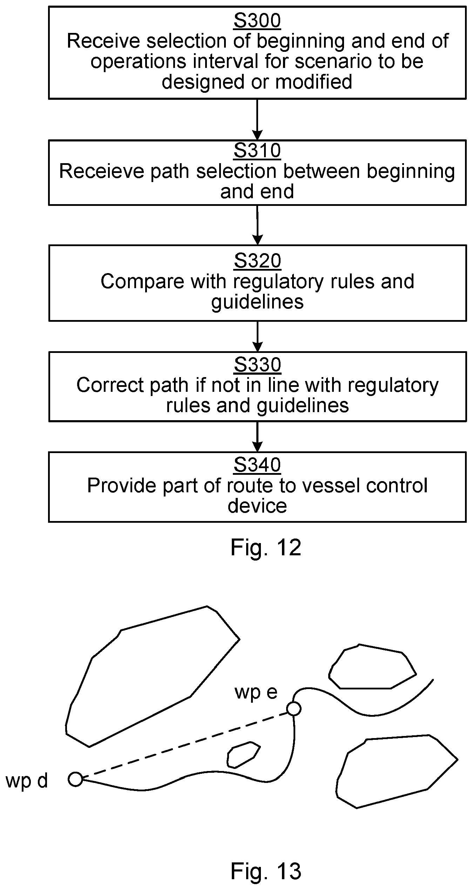

How this may be done will now be described with reference being made to fig. 12 and 13, where fig. 12 shows a flow chart of a number of method steps for determining a scenario and fig. 13 schematically shows a change of a part of route in the scenario based on rules and regulations.

The user assisting function of the user assisting device 10 may receive a selection of a first endpoint of the operations interval of the scenario and optionally also of a second endpoint of the operations interval of the scenario, where the first endpoint is the beginning of the operations interval or a first position of the part of the route R and the second endpoint is an end of the operations interval or last position of the part of the route R. As an example, the beginning and the end of the operations interval of a scenario to be designed or modified is received from the user, S300. In the example of the fourth scenario SC4, these points or positions are the fourth and fifth waypoints d, e. The user assisting function may in this case also receive a path selection between the beginning and end of the part of the route, S310, which in this case is a path selection between the first and last positions of the part of the route, i.e. between the fourth and fifth waypoints d, e. The user assisting function then compares the path with regulatory rules and guidelines, S320, where the rules and guidelines may be current rules and guidelines. The user assisting function then corrects or changes the path if it does not fulfil or is not in line with the regulatory rules and guidelines, S330. Thereafter the user assisting function may provide the thus set part of route to the vessel control device 28 for being used in the operation of the vessel along this part of the route when applying the control of the corresponding scenario, S340.

In the example of fig. 13, the user may have wanted the first vessel to sail directly to the fifth waypoint e after the fourth waypoint d, but this request may have been declined by the user assisting device 10 because this action violates regulations, such the MARPOL (the International Convention for the Prevention of Pollution from Ships) regulations. It is also possible that the selected path was unsafe.

The user assisting device thus provides compliance assurance: This integrated compliance mechanism may systematically review and validate user-generated scenarios against relevant legal guidelines, assuring both safety and regulatory adherence. It may ensure all user induced alterations comply with established maritime rules and regulations.

Maritime regulations may be constantly evolving. The user assisting device may ensure compliance by dynamically adjusting to new regulations and standards.

The user assisting device may thus orchestrate automation solutions, streamline processes and minimize the need for manual, preparatory operations or memory-dependent actions in the maritime domain. It may also streamline bridge operations based on user-defined or manufacturer-defined conditions, perhaps after user's confirmation. The actions can also be triggered by human users manually. The user assisting device will use ship's location, ship status, current CPA or TCPA values to other ships, time, date, and sensor data to enable context-awareness and high customization. It also provides default built-in yet customizable scenarios for frequently used contexts, including but not limited to critical situation, night shift, and navigation in various voyage stages.

The user assisting device may also automatically configure alarm modality, safety thresholds (CPA, TCPA threshold, safety distance to other target ships when doing autonomous driving), speed and course, and information presentation (layout and content), various biophysical settings (such as sound, temperature, seat position, height, brightness of the screens, ambient light), or activate certain systems (e.g., a crash stop system and SMS broadcasting system in critical situation handling) based on user-defined or manufacturer-defined conditions.

The user assisting device may also ensure that all alterations comply with established maritime rules and regulations through the integrated compliance mechanism that systematically reviews and validates user-generated scenarios against relevant legal guidelines. It may also integrate advanced language processing tools and data analysis methods in a maritime context to provide intelligent, context-aware recommendations for scenario building. The system can suggest conditions and actions for scenario creation based on multiple data sources, including ship status, weather, traffic situation, and user's text or vocal inputs. It facilitates user-friendly scenario building through a drag-and-drop interface, making automation more accessible to non-tech-savvy users.

Thus, the user assisting device is a context-aware hub for vessel bridge information systems, paving the way for highly customizable automation scenarios. Depending on preset trigger conditions or user behavior, these scenarios automate settings adjustments and manual tasks. The user assisting device may also orchestrate triggered actions flexibly, permitting configurable alarm modalities specific to a context. For example, CPA alarms might display as text during certain legs, while rare alarms could utilize vocal alerts instead of traditional beeping sounds. Other dynamic actions could involve updating CPA&TCPA alarm thresholds, safety distances to other ships, changes to speed and course, and biophysical settings like screen brightness, sound, temperature, and seat position.

Default, yet customizable, scenarios provided by manufacturers enable the creation of common solutions for frequent usage contexts such as archipelago or open water sailing, night shifts, or critical situation handling. Information representation and navigational settings can be adjusted based on ship location, time, status, and other contextual factors. For critical situations, numerous preparatory tasks can be automated, including activating crash stop systems, changing UI layouts and settings, messaging crew or VTS, displaying emergency protocols, or using the ship's horn. Furthermore, the user assisting device may also ensure that all alterations comply with established maritime rules and regulations through an integrated compliance mechanism that systematically reviews and validates user-generated scenarios against relevant legal guidelines.

For users, the user assisting device may also introduce a system and framework to orchestrate automation solutions, streamlining processes, and minimizing the need for manual, preparatory operations or memory-dependent actions. It aids users in quickly identifying and diagnosing alarms based on their unique modalities, reducing confusion. It also allows for context-aware adaptive GUI, mitigating the risk of information overload.

The invention may be varied in a number of ways. Therefore, while the invention has been described in connection with what is presently considered to be most practical and preferred embodiments, it is to be understood that the invention is not to be limited to the disclosed embodiments, but on the contrary, is intended to cover various modifications and equivalent arrangements. Therefore, the invention is only to be limited by the following claims.

## Claims

1. A method for assisting a user in automating operations of a vessel (22), the method being performed by a user assisting device (10) and comprising:
providing (S100; S200) a number of scenarios (SC1, SC2, SC3, SC4, SC5, SC6, SC7) for operating the vessel (22),
providing (S110; S210) for a scenario to be designed or modified, a set of actions (A1, A2, A3) triggerable by conditions in or around the vessel (22);
receiving (S120; S230) a selection of at least one action (A1, A2) of the set from the user; and
implementing (S120; S250) said at least one action (A1, A2) for being performed in said scenario if at least one corresponding condition (C1, C2) is being fulfilled.

2. The method as claimed in claim 1, further comprising receiving, from the user, a selection of at least one condition (C1, C2) used to trigger said at least one selected action.

3. The method according to claim 1 or 2, further comprising determining (S210) the set of actions (A1, A2, A3) based on data from sensors (24, 26) sensing the environment of the vessel and/or based on data from the vessel (22).

4. The method as claimed in any previous claim, wherein the scenarios (SC1, SC2, Sc3, Sc4, SC5, SC6, SC7) are of different types and the set of actions (A1, A2, A3) being provided depends on the type of scenario to be designed or modified.

5. The method as claimed in any previous claim, wherein at least some of the scenarios are associated with corresponding operations intervals.

6. The method according to claim 5, wherein at least one of the intervals is event-triggered.

7. The method as claimed in claims 5 or 6, further comprising receiving (S300), from the user, a selection of a first endpoint of an operations interval of the scenario being designed or modified, which first endpoint (d) is either the beginning or the end of the operations interval.

8. The method as claimed claim 7, wherein the interval is a time interval.

9. The method as claimed in claim 7 or 8, wherein the interval is an interval of positions along a part of a route (R) of the vessel (22).

10. The method as claimed in claim 9, wherein the beginning of the interval is a first position (d) of the part of the route and the end is a last position (e) of the part of the route.

11. The method as claimed in claim 10, further comprising receiving (S310) a selection from the user of a path between the first and last positions (d, e), comparing (S320) the path with regulatory rules and guidelines and changing (S330) the path if it does not fulfil the regulatory rules and guidelines.

12. A user assisting device (10) comprising
a processor (12) operative to:
provide a number of scenarios SC1, SC2, SC3, SC4, SC5, SC6, SC7) for operating the vessel (22),
provide for a scenario to be designed or modified, a set of actions (A1, A2, A3) triggerable by conditions in or around the vessel (22);
receive a selection of at least one action (A1, A2) of the set from a user; and
implement (S120; S250) said at least one action (A1, A2) for being performed in said scenario if at least one corresponding condition (C1, C2) is being fulfilled.

13. A vessel (22) comprising the user assisting device (10) according to claim 12.

14. The vessel (22) according to claim 13 further comprising a first sensor (24) operable to obtain weather data and a second sensor (26) operable to obtain traffic data.

15. The vessel according to claim 13 or 14, further comprising a vessel control device (28) operative to provide a vessel control function (30), which vessel control function (30) is configured to apply the selected at least one action (A1, A2) in the operation of the vessel (22) in said modified or created scenario if said at least one corresponding condition (C1, C2) is being fulfilled.
